# EUROPEAN PATENT APPLICATION

(11) **EP 2 077 211 A1**
(43) Date of publication of application: **08.07.2009**
(21) Application number: 08425003.4
(22) Date of filing: 02.01.2008
(51) Int. Cl.: B60S 3/04

(54) **Automatic washing plant for vehicles and washing procedure thereof**

(71) Applicant: Ceccato S.p.A., 36075 Alte Ceccato di Montecchio Maggiore (VI) (IT)
(72) Inventor: Corrado, Molo, 36016 Thiene (IT); Elvio de Silvio, Marcelo, 36031 Vicenza (IT)
(74) Representative: Rapisardi, Mariacristina

(57) **Abstract**

The automatic washing plant for vehicles comprises a portal (1) and driving means (2) for driving at least a first motor (3) for displacement of said portal (1) along a longitudinal translation direction, and switching means (4) for selectively connecting the driving means (2) to the first motor (3) or to at least one second motor (5) for rotation of at least one washing device for washing the wheels (7) of the vehicles.

## Description

The present invention relates to an automatic washing plant for vehicles and a washing procedure thereof.

Automatic washing plants generally comprise a portal and driving means for driving at least a first motor for displacement of the portal along a longitudinal translation direction. The portal generally has a plurality of brushes or nozzles for washing the outline of the vehicle, including rotatable disks with brushes or nozzles for washing the wheels thereof. In normal use of such washing plants, the vehicle is typically first driven into the plant and stopped. The washing programme is started and the portal is moved in a longitudinal direction at variable speed by driving means. When the portal is adjacent to the wheels of the vehicle, it is stopped and rotation of the disks with the brushes or the nozzles for washing the wheels is activated. These disks are generally rotated in a clockwise and an anti-clockwise direction relative to the axes of the wheels.

However, the capacity of such automatic washing plants of the prior art to wash the wheels of the vehicles is poor. The fixed speed of rotation of the disks renders poor washing results.

The technical task proposed by the present invention is therefore that of providing an automatic washing plant for vehicles and a washing procedure thereof that overcome the noted technical drawbacks of the prior art.

Within the scope of this technical task is therefore that of providing an automatic washing plant and a washing procedure for vehicles with improved capacity to wash the wheels of vehicles effectively.

A further scope is that of providing an automatic washing plant and a washing procedure for vehicles with improved capacity to wash the wheels of vehicles effectively without substantially increasing the plant overall cost.

The technical task, as well as these and other objects, are achieved according to the present invention by an automatic washing plant for vehicles comprising a portal and driving means for driving at least a first motor for displacement of said portal along a longitudinal translation direction, characterised in that of having switching means for selectively connecting said driving means to said first motor or to at least one second motor for rotation of at least one washing device for washing the wheels of said vehicles.

The present invention also relates to a method of washing vehicles in an automatic washing plant of the type comprising a portal and driving means for driving at variable speed at least a first motor for displacement of said portal along a longitudinal translation direction, characterised in that it comprises the step of selectively switching the connection of said driving means from said first motor to at least one second motor for rotation of at least one washing device for washing the wheels of said vehicles when said portal is stopped adjacent to said wheels.

The connection of the driving means to the at least one second motor makes it possible to vary the speed of the at least one washing device for washing the vehicle wheels. The variation of speed in turn renders the washing action of the plant and of the procedure much more effective than that of the prior art..

The variation in speed allows for the selection of acceleration and deceleration times, thus leading to smoother rotational movement, decreasing the amount of mechanical stress that the washing plant is subject to and increasing the life span of the washing plant. Smoother operation also reduces the noise output of the plant.

Furthermore, the use of the same driving means for driving both the first and the second motor prevents the need for separate driving means for the second motor, thereby avoiding the significantly high cost and space requirements associated therewith. The use of the same driving means is made possible by the switching of the connection when the portal is stopped and the driving means are not needed for moving the portal.

Use of at least one washing device for washing the vehicle wheels allow for great flexibility of use of the washing plant. The washing device can comprise a disk having brushes for scrubbing or polishing the wheel surfaces, nozzles for aiming jets of washing agent or chemical treatment agent at the wheel surfaces, high-pressure nozzles for high-pressure washing of the wheel surfaces, or a combination of any of these. For each type of appendage on the disk, there is an optimal speed of rotation for the best washing effect. The washing plant of the present invention thus offers great flexibility of use while optimising the washing action.

Similarly, the controllable rotational movement of the washing device itself allows for great flexibility of use. Eccentric rotation of the washing device about an axis allows a larger area to be covered, allowing one entire surface of a larger wheel to be washed. Eccentric rotation usually decreases the effectiveness of the washing action at the edges of the wheel due to the inherent increase in the tangential velocity of the washing device in these areas. As the washing device of the present invention is connectable to the driving means, the speed of the eccentric rotation can be controlled, thereby improving the washing effect even on larger wheels.

Other characteristics of the present invention are moreover defined in the subsequent claims. Further characteristics and advantages of the present invention will be more evident from the description of preferred, but not exclusive, embodiments of the automatic washing plant according to the finding, illustrated in the attached, non-limiting drawings, wherein:
Figure 1 shows a front view of one embodiment of the present invention with a brush type washing plant and a car type vehicle.
Figure 2 shows a front view of one embodiment of the present invention with a brush-covered disk for washing wheels, both during portal movement and during washing of the wheels.
Figure 3 shows a front view of one embodiment of the present invention with an eccentrically arranged brush-covered disk for washing wheels, both during portal movement and during washing of the wheels.
Figure 4 shows a side view of the disk of Figure 3.
Figure 5 shows a front view of one embodiment of the present invention with a brush-covered disk for washing wheels also having eccentrically arranged nozzles, both during portal movement and during washing of the wheels.
Figure 6 shows a side view of the disk of Figure 5.
Figure 7 shows a front view of one embodiment of the present invention with a disk for washing wheels having slidably mounted nozzles, both during portal movement and during washing of the wheels.
Figure 8 shows a side view of the disk of Figure 7.
Figure 9 shows a schematic view of one embodiment of the control system of the present invention.
Figure 10 shows a schematic view of a control system of the prior art.

With reference to the above figures, the automatic washing plant for vehicles comprises a portal (1) and driving means (2) for driving at least a first motor (3) for displacement of the portal (1) along a longitudinal translation direction. The displacement of the portal (1) is preferably guided by a track.

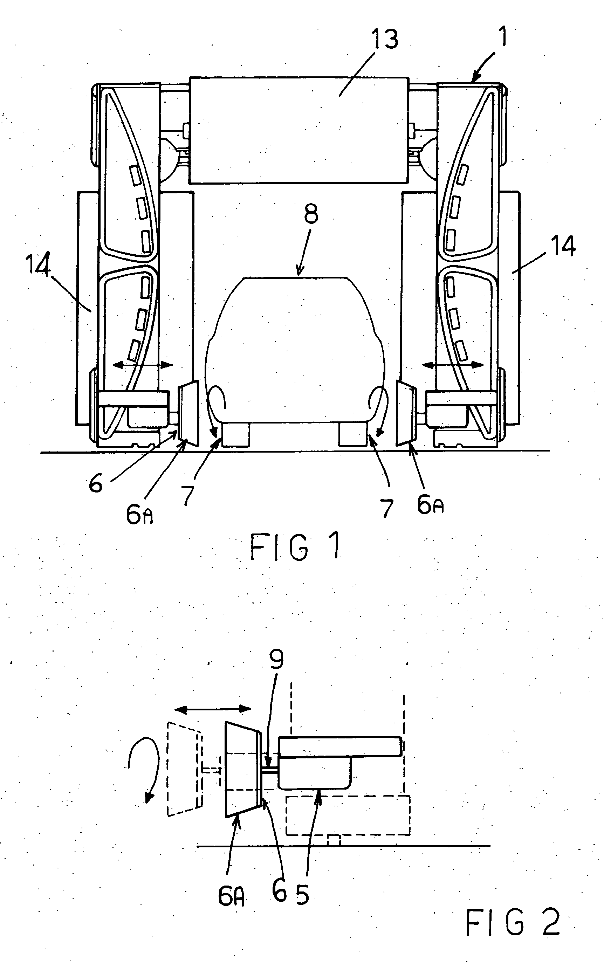

In Figure 1, a horizontal rotating brush (13) and vertical rotating brushes (14) are shown.

The driving means (2) are connected to the control unit (11) of the plant (1).

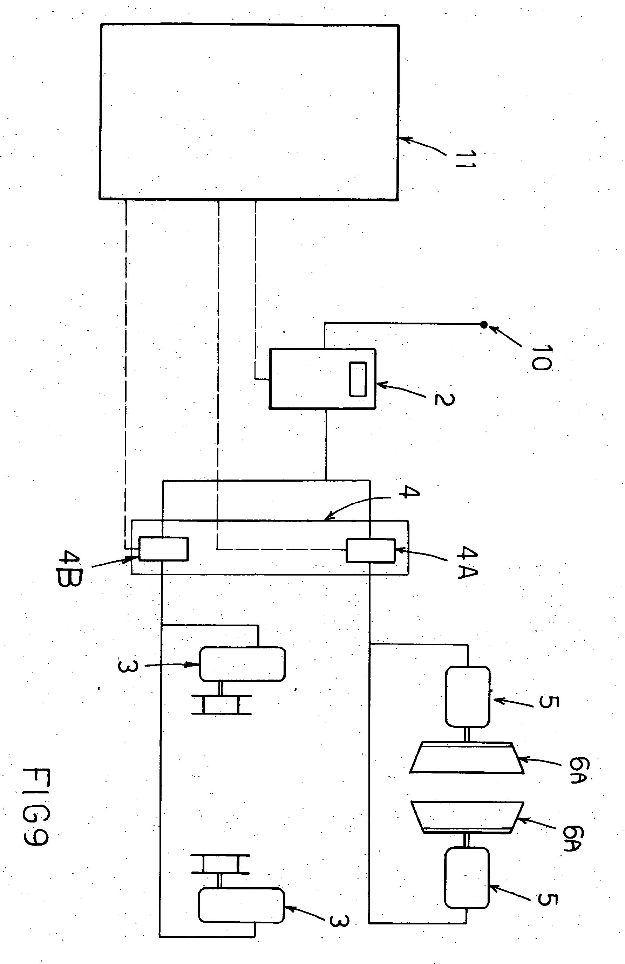

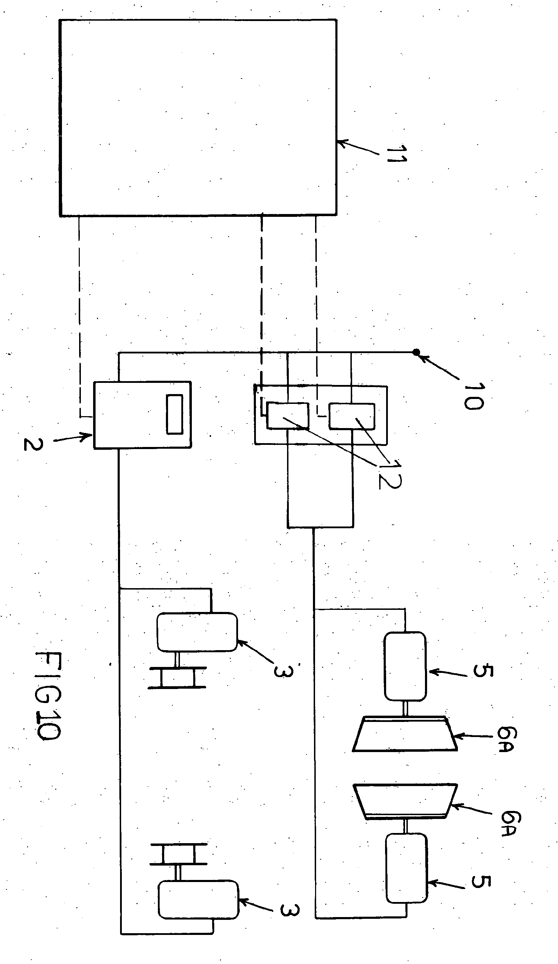

The plant further comprises switching means (4) for selectively connecting the driving means (2) to the at least one first motor (3) or to at least one second motor (5) for rotation of at least one washing device for washing the wheels (7) of the vehicles (8). The washing device is preferably in the form of a disk (6) supporting at least one brush (6A). It will of course be appreciated that the brush (6A) and its bristles can be of any size, shape or composition. In Figures 9 and 10, a first couple of motors (3) and (5) is shown on the left side of the plant and a second couple of motors (3) and (5) is shown on the right side of the plant. The driving means (2), connected to a power supply (10), are preferably in the form of an inverter, allowing the first (3) and second (5) motors to be driven at variable speed.

In the case of a digital inverter, the disk (6) may be rotated at two or three different pre-set speeds and the time for acceleration and deceleration rotation may be selected. In the case of an analogue inverter, the disk may be rotated at any speed, in any direction, at any time. This permits a vast and continuous range of velocities to be used and allows for the generation of specific moments, such as oscillation of the disk, with or without overall rotational displacement thereof. It also permits progressive acceleration and deceleration of rotation.

Where brushes (6A) are used on the disks (6), the variation of rotational speed allows for better penetration of the brush bristles on the surface of the wheels (7), thereby improving the washing effect. The velocity-penetration ratio is also dependent upon the density, flexibility, and length of the bristles. For each set of bristle characteristics there is an optimal velocity for the best washing action.

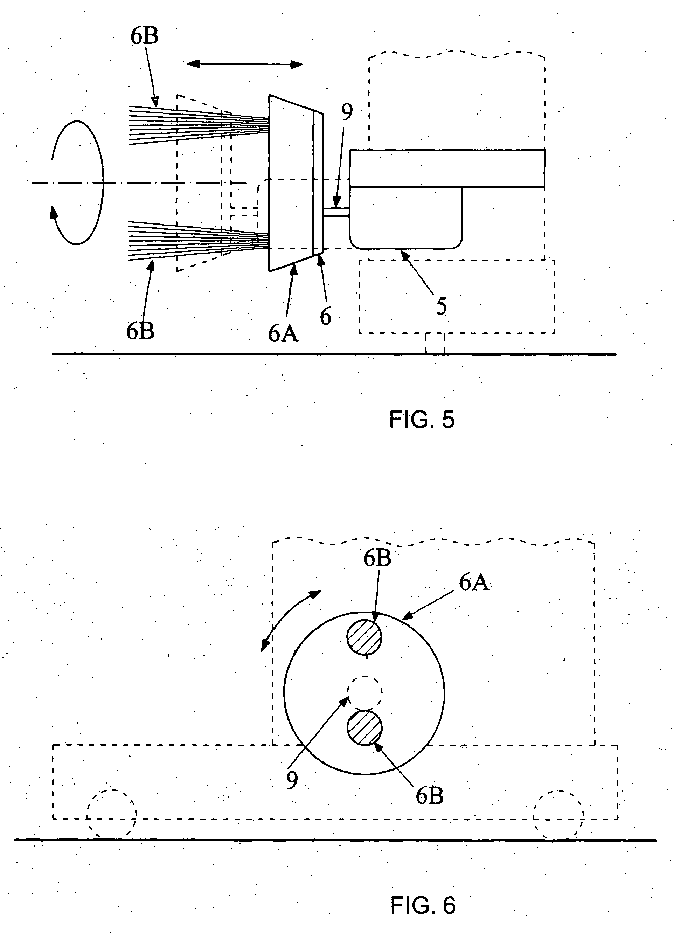

The washing plant and the disks (6) may each use at least one nozzle in place of brushes (6A, 13, 14). These nozzles can be used for delivering jets (6B) of washing agents or surface treatment agents to the surface of the vehicle (8) and its wheels (7). Alternatively, the jets (6B) from the nozzles may be used for high-pressure washing. The disks (6) may also have a combination of nozzles and brushes (6B), as in Figure 5. The variation of rotational speed allows for better penetration of the washing agent on the surface of the wheels (7), thereby improving the washing effect.

The disks (6) are advantageously connected to the portal (1) via support shafts (9) telescopically extendible in an axial direction towards the wheels. Each disk (6) is preferably coaxially held on a head of a shaft (9), said shaft being rotatable by the second motor (5). This in turn rotates the disk (6).

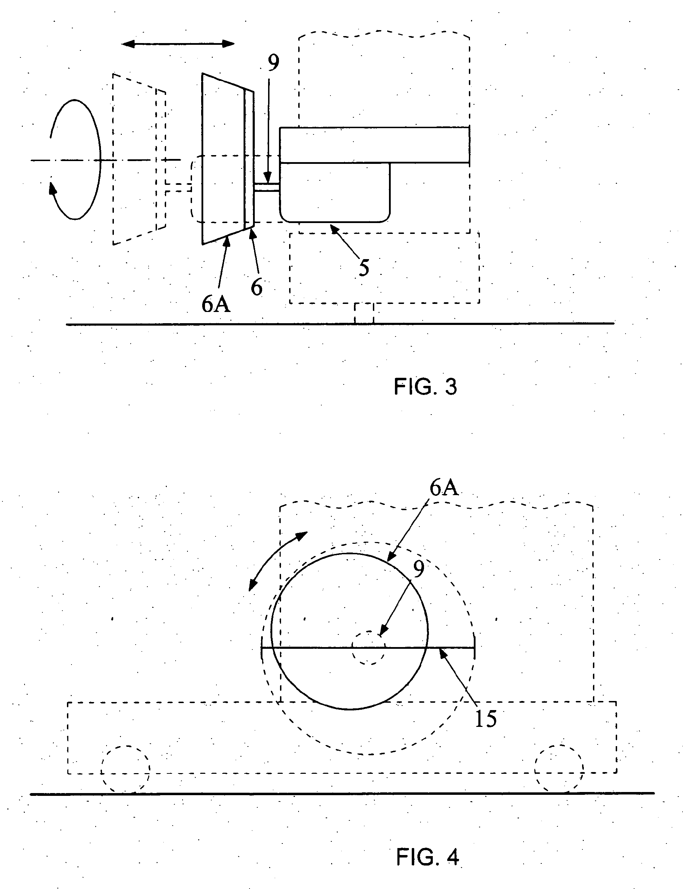

In a different embodiment of the present invention, the disk (6) is held eccentrically to the axis of the support shaft (9), as shown in Figures 3 and 4. In this way, a small disk (6) can be used to achieve a large effective washing diameter (15), hence enabling washing of larger wheels. However, the increased effective washing diameter increases the tangential velocity of the bristles at the outermost edge thereof. This in turn leads to poor contact between the bristles of the brushes (6A) and the surface of the vehicle wheel (7), thereby decreasing the effectiveness of the washing action.

The use of the inverter, however mitigates this problem associated with the eccentric disk arrangement by permitting reduction of the speed of rotation of the disk. Furthermore, the controlled variation of speed also enables stabilisation of the uneven rotational movement due to the eccentric rotation.

A similar arrangement is applicable where the disks (6) have nozzles or nozzles combined with brushes (6A). As shown in Figures 5 and 6, although the disk (6) itself if not rotated eccentrically, the nozzles are positioned at differing distances from the centre of rotation, namely the position of the shaft (9) supporting the disk, thereby increasing the total area covered by the jets (6B) from the nozzles.

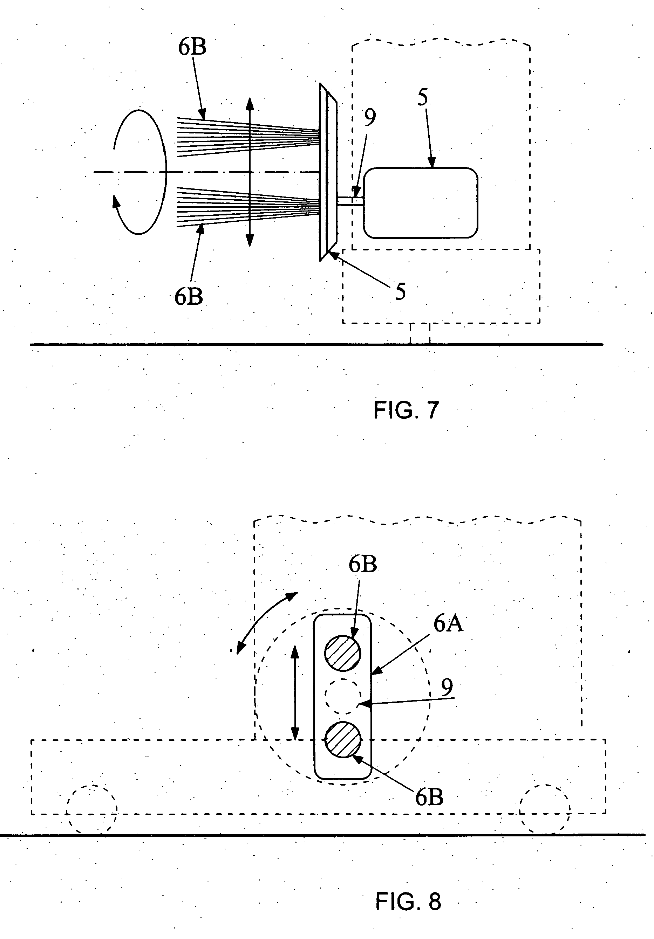

In a further variation of the present invention, the at least one nozzle may be radially slidably mounted along at least one radially extending track on the disk (6), as shown in Figures 7 and 8. The centrifugal force caused by the rotation of the disk moves the nozzle and the associated jet (6B) along the track, away from the centre of rotation. At least one spring connecting the nozzle to the centre of the disk ensures the return of the nozzle towards the centre when the speed of rotation decreases.

Thus, this arrangement can be used to wash a wide range of vehicle wheel diameters, the controllable speed of rotation determining the effective diameter of the washing area. Clearly, by initially positioning the nozzles at the centre of the disk (6) and by gradually increasing the speed of rotation, the washing plant enables the jets (6B) to wash the entire surface of the wheel (7).

In Figures 7 and 8 it can be appreciated that a telescopically extendible shaft (9) is not necessary, especially where the disk does not have brushes, as the disk (6) does not need to approach the wheels (7) in order for the jets (6B) to act thereupon. Moreover, it can be appreciated from Figure 8 that the disk (6) can be in the form of a rectangular unit, rotatable about, or eccentrically to, a shaft (9).

The plant preferably also comprises detecting means for detecting the presence of the vehicle wheels (7) adjacent to the portal (1).

As shown in Figure 9, these detecting means are connected to the control unit (11) and the switching means (4) are also connected the control unit (11) for activation when the signal from the detecting means changes. The switching means (4) may be in the form of remote control switches (4A) and (4B) on each of the lines leading from the power supply (10) via the driving means (2). Since both the first (3) and the second (5) motors are connectable to the driving means (2), the driving means can control the speed of each motor. Hence, the disks (6) can be rotated at variable speed.

In contrast, in a control system of the prior art, as shown in Figure 10, only the first motor (3) is connected to the driving means (2). The at least one second motor (5) is connected directly to the power supply and hence can only rotate the disks (6) for washing the wheels at a fixed speed.

The method of the present invention for washing vehicles in an automatic washing plant of the type comprising a portal (1) and driving means (2) for driving at variable speed at least a first motor (3) for displacement of the portal along a longitudinal translation direction comprises the step of selectively switching the connection of the driving means from the first motor to at least one second motor (5) for rotation of at least one washing device for washing the wheels (7) of the vehicles (8) when the portal is stopped adjacent to the wheels.

The method preferably comprises a first step of detecting the presence of the vehicle wheels (7) adjacent to the portal (1). It also preferably comprises a second step of stopping the portal (1) in its longitudinal translation path when the presence of the wheels (7) is detected. An advantageous third step is then that of moving the at least one washing device for washing the wheels towards the wheels (7) when the portal (1) is stopped.

In typical operation of one embodiment of the plant of the invention, the vehicle (8) is driven into the plant and stopped therein. The portal (1), initially in a position in front of the vehicle, is driven backwards along a track by a first motor (3), at a speed controlled by the driving means (2). Brushes (13) and (14) for washing the outline of the vehicle are generally rotated during the longitudinal translation of the portal (1).

When the portal (1) reaches a position adjacent to the wheels (7), sensors of the detecting means detect their presence, changing the signal to the control unit (11), and the portal stops. This activates the switching means (4) such that the inverter is disconnected from the first motor (3) and is instead connected to at least one second motor (5) for rotating the at least one washing device for washing the wheels of the vehicle at variable speed.

The at least one washing device for washing the wheels may be moved toward the wheels (7) by a pneumatically operated telescopically extendible shaft (9) and the washing device is rotated at variable speed in both a clockwise and a counter-clockwise direction according to the washing programme set. The washing device may then be retracted, the switching means re-activated, the inverter re-connected to the first motor (3), and the portal (1) moved further along the track.

The automatic washing plant for vehicles and the washing procedure thereof thus conceived are susceptible to numerous modifications and variations, all falling within the scope of the inventive concept; furthermore, all details may be substituted by technically equivalent elements. In practice, any material type or size may be used, according to the needs and the state of the art.

## Claims

1. An automatic washing plant for vehicles comprising a portal and driving means for driving at least a first motor for displacement of said portal along a longitudinal translation direction, **characterised in that** of having switching means for selectively connecting said driving means to said first motor or to at least one second motor for rotation of at least one washing device for washing the wheels of said vehicles.

2. An automatic washing plant as claimed in claim 1, **characterised in that** said washing device comprises at least one disk supporting at least one brush for washing the wheels of said vehicles.

3. An automatic washing plant as claimed in claim 1, **characterised in that** said washing device comprises at least one disk supporting at least one nozzle for washing the wheels of said vehicles.

4. An automatic washing plant as claimed in claim 1, **characterised in that** said washing device comprises at least one disk supporting at least one brush and at least one nozzle combined for washing the wheels of said vehicles.

5. An automatic washing plant as claimed in claim 1, **characterised in that** said switching means comprise a first remote control switch connecting said driving means to said first motor and a second remote control switch connecting said driving means to said at least second motor.

6. An automatic washing plant as claimed in any preceding claim, **characterised in that** said first remote control switch and said second remote control switch are connected to the control unit of said plant.

7. An automatic washing plant as claimed in any preceding claim, **characterised in that** said driving means comprise an inverter connected to said control unit.

8. An automatic washing plant as claimed in any preceding claim, **characterised in that** said disk is eccentrically held on a head of a rotating support shaft driven by said second motor.

9. An automatic washing plant as claimed in any preceding claim, **characterised in that** said disk is coaxially held on a head of a rotating support shaft driven by said second motor.

10. An automatic washing plant as claimed in any preceding claim, **characterised in that** said rotating support shaft has a telescope structure.

11. An automatic washing plant as claimed in any preceding claim, **characterised in that** said at least one nozzle is fixedly mounted on said disk.

12. An automatic washing plant as claimed in any preceding claim, **characterised in that** said at least one nozzle is radially slidably mounted along a radial track on said disk.

13. An automatic washing plant as claimed in any preceding claim, **characterised in that** it comprises detecting means for detecting the presence of said vehicle wheels adjacent to said portal, said detecting means being connected to said control unit for activation of said switching means when the signal from said detecting means changes.

14. A method of washing vehicles in an automatic washing plant of the type comprising a portal and driving means for driving at variable speed at least a first motor for displacement of said portal along a longitudinal translation direction, **characterised in that** it comprises the step of selectively switching the connection of said driving means from said first motor to at least one second motor for rotation of at least one washing device for washing the wheels of said vehicles when said portal is stopped adjacent to said wheels.

15. An automatic washing plant as described and claimed.
